(19) Europäisches Patentamt European Patent Office Office européen des brevets

(11) **EP 4 708 841 A1**

(12) **EUROPEAN PATENT APPLICATION**

(43) Date of publication:
**11.03.2026 Bulletin 2026/11**

(21) Application number: **24199403.7**

(22) Date of filing: **10.09.2024**

(51) International Patent Classification (IPC):
**H04N 9/31** (2006.01)

(52) Cooperative Patent Classification (CPC):
**H04N 9/3135; H04N 9/3129; H04N 9/3161; H04N 9/3194**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: TriLite Technologies GmbH
**1040 Wien (AT)**

(72) Inventors:
• **SCHMID, Gerhard**
**3844 Waldkirchen (AT)**
• **MAIER, Franz Josef**
**9210 Pörtschach am Wörthersee (AT)**
• **DORFMEISTER, Manuel**
**1020 Wien (AT)**
• **REITTERER, Joerg**
**2345 Brunn am Gebirge (AT)**

(74) Representative: **Weiser Voith Gugler Patentanwälte Partnerschaft Kopfgasse 7 1130 Wien (AT)**

Remarks:
Amended claims in accordance with Rule 137(2) EPC.

(54) **LIGHT SOURCE, LIGHT SOURCE SYSTEM AND PROJECTOR**

(57) The invention relates to a light source (4) for a projector (1) projecting pixels ($P_i$), which receives, for each pixel, a respective brightness value ($BV_i$) indicating a target brightness ($B_i$), forms, for each brightness value, a respective current pulse ($CP_i$), superimposes a constant bias current ($I_b$) and the current pulses for obtaining a driving current ($I_d$) for driving a laser diode (14), wherein the laser diode transforms each current pulse into a respective laser pulse ($LP_i$) having the target brightness of the respective pixel, wherein said bias current is less than 90% of a threshold current for lasing and the light source calculates amplitudes ($A_i$) of the current pulses from the brightness values and forms the current pulses such that each two consecutive current pulses are separated by a pause (P). The invention further relates to a light source system (4') and a projector (1).

*Fig. 1*

EP 4 708 841 A1

**Description**

The present invention relates to a light source for a projector projecting an image comprised of pixels, the light source comprising a laser diode and a laser diode driver, wherein the laser diode driver is configured to receive, for each pixel of the image, a respective brightness value indicating a target brightness of that pixel, to form, for each brightness value, a respective current pulse having an amplitude corresponding to that brightness value, to superimpose a constant bias current and the current pulses for obtaining a driving current, and to drive the laser diode with the driving current, and wherein the laser diode is configured to lase when the driving current exceeds a threshold current and to transform each current pulse into a respective laser pulse yielding the target brightness of the respective pixel. The invention further relates to a light source system and a projector comprising said light source or light source system.

Light sources of the abovementioned kind are commonly used in projectors of virtual reality (VR) or augmented reality (AR) glasses or helmets, video beamers, head-up-displays (HUDs), etc. in a broad range of applications like navigation, training, entertainment, education, work, etc., i.a. due to the high energy efficiency and directivity of laser diodes. In such applications, the light source(s) is/are usually combined with one or more oscillating mirrors to form a projector, wherein the mirror (s) deflect and scan the laser pulses over an image area to project one pixel after the other. The bias current is set to equal the threshold current for lasing and the amplitudes of the current pulses superimposed with the bias current account for the portion of the driving current above the threshold current. Consequently, the control of the pixel brightness is simple; in the simplest, namely linear case, the amplitude value equals the brightness value. Being permanently biased to the edge of its lasing regime, the laser diode generally emits coherent laser pulses and the response of the laser diode to each current pulse is fast. In some applications, however, the coherence of the emitted laser pulses causes undesired interference effects such as speckles, e.g. when the laser pulses are projected onto a rough surface, so-called Newton rings, e.g. when the laser pulses are guided through a waveguide (e.g. of a waveguide combiner), fringes, or the like, in any case deteriorating the quality of the projected image.

It is an object of the invention to provide a light source and a projector, which both allow for projecting an image at a high quality.

In a first aspect of the invention, this object is achieved with a light source as specified at the outset, wherein said bias current is less than 90% of said threshold current, and wherein the laser diode driver further comprises a first converter configured to calculate the amplitudes and a second converter configured to form the current pulses, each two consecutive current pulses being separated by a pause.

The invention breaks with the paradigm of biasing the laser diode to the edge of the lasing regime. Instead, the bias current is considerably lower than the threshold current, i.e. reduced compared to conventional light sources. The first converter calculates the amplitudes of the current pulses such that the resulting current pulses and the emitted laser pulses yield the target brightness of each pixel. To this end, the calculated amplitudes exceed the amplitudes of conventional light sources by the difference of the threshold current and the bias current in order to compensate for the lower bias current. The second converter forms the current pulses with pauses between consecutive ones such that, in each pause, the driving current is significantly below the threshold current which intermits lasing and reduces or breaks the coherence of consecutive laser pulses. Due to the incoherence of consecutive laser pulses the undesired interference effects are suppressed (at least to a non-perceivable level), which improves the quality of the projected image.

The first converter may further account for one or more ambient and/or interior conditions affecting the brightness perceived by a user, e.g. ambient light conditions, temperature induced changes of the laser diode characteristic, an amplification level of an automatic power control (APC) circuit for the laser diode, etc., when calculating the amplitudes, e.g., at the fast rate of pixel processing by the laser diode driver. Hence, the high quality of the image can be sustained even when conditions change quickly.

In a favourable embodiment, the bias current is in a range of 10% to 80%, preferably of 20% to 70%, particularly preferably of 30% to 60%, of said threshold current. This allows, on the one hand, for efficiently breaking the coherence and, on the other hand, for a fast transformation of each current pulse to the respective laser pulse, i.e. for a fast laser diode response. In addition, a lower bias current also reduces energy consumption of the light source.

The first converter may calculate the amplitudes in many different ways to compensate for the reduced bias current, e.g., according to one of the following beneficial embodiments.

In a first beneficial embodiment, the first converter is configured to calculate each amplitude by scaling the respective brightness value by a scaling factor and adding a bias value. Thereby, the range from the lowest to the highest brightness value and, thus, the range from the lowest to the highest amplitude is scaled to use a desired range of the driving current for laser pulse emission, e.g., the full range between the threshold driving current and a maximum driving current to project the image at a maximal brightness or a smaller range to project the image at a lower brightness, for instance to dim the projection for low ambient brightnesses. In the frequent case of quantised brightness values and amplitudes, the scaling factor is advantageously larger than one. In this case, the scaling factor may be used to convert brightness values of a lower bit depth to amplitudes of a higher bit depth in order to preserve brightness resolution, reduce the influence of round-off errors and, thus, reproduce the target brightnesses particularly precisely by the laser pulses.

In a second beneficial embodiment, the first converter is configured to calculate each amplitude by means of a given non-linear function. Such a non-linear function, e.g. a piecewise linear or a (piecewise) polynomial, logarithmic, exponential, or rational function, etc., can take into account nonlinearities of the laser diode characteristic and/or the non-linear perception of brightness by the human eye, e.g. in terms of gamma- and/or gamut-correction. Hence, using the non-linear function allows for projecting the image at a particularly high quality.

In a third beneficial embodiment, the first converter is configured to store a look-up table holding, for each brightness value, the corresponding amplitude, and to calculate each amplitude by retrieval from the look-up table. In this way, the second converter can calculate the amplitudes in a particularly fast and simple manner even for complex dependencies of the amplitudes on the brightness value. Thus, the first converter may be embodied by simple hardware and/or may process many pixels per time interval to project images at a high frame rate and/or resolution. Moreover, dependencies that are inaccurately or in-feasibly modelled by functions may be predetermined, e.g., by measurement and stored in the look-up table.

In a second aspect, the invention provides a light source system comprising two or more of the abovementioned light sources, wherein the light sources differ from one another in the wavelengths of the laser pulses they are configured to emit, in order to to project a multicoloured image.

In a preferable embodiment of the light source system, each of the light sources has a respective laser diode driver which is configured to receive, for each pixel of the image, brightness values, each of which for a different colour, and wherein the first converter of each laser diode driver is configured to calculate the respective amplitude on the basis of the brightness values received for that pixel. In this way, the first converters which, hence, can convert the colour space used for the brightness values, e.g. an RGB colour space, of the pixels to the colour space provided by the different wavelengths of the light sources, e.g. an R'G'B' colour space having different red, green and blue wavelengths. Thus, the respective other colour channels are admixed when calculating the amplitudes to adapt the same to the available wavelengths. Thereby, also wavelength drifts of the laser diodes which are, e.g., induced by temperature, component ageing, etc. and most often differ for different wavelengths and laser diodes, can be taken into account and compensated when calculating the amplitudes.

In a third aspect, the invention provides a projector for projecting an image, comprising the abovementioned light source or light source system, a mirror assembly with one or more mirrors configured to oscillate and deflect the laser pulses emitted by said one or more light sources, and a waveguide configured to guide the deflected laser pulses towards an image area for projecting said image. Thereby, the laser pulses emitted by the light source/s with a reduced or broken coherence as described above can be guided by the waveguide without undesired interference effects, e.g., Newton rings, to project a high quality image.

To project a multicoloured image, the projector advantageously comprises at least two light sources for emitting laser pulses of different wavelengths, e.g. three light sources with a red, a green and a blue laser diode, respectively.

The invention shall now be explained in more detail below on the basis of exemplary embodiments thereof with reference to the accompanying drawings, in which show:

Fig. 1 a projector comprising a light source according to the invention, in the process of projecting an image, in a schematic diagram;
Fig. 2 an exemplary characteristic of a laser diode of the light source of Fig. 1, in a diagram of output power over driving current;
Figs. 3 and 4 a first and a second exemplary embodiment, respectively, of a first converter of a light source driver of the light source of Fig. 1, in the process of calculating amplitudes from brightness values, in a schematic diagram; and
Fig. 5 a further embodiment of the projector of Fig. 1 comprising three light sources according to the invention, in the process of projecting a multicoloured image, in a schematic diagram.

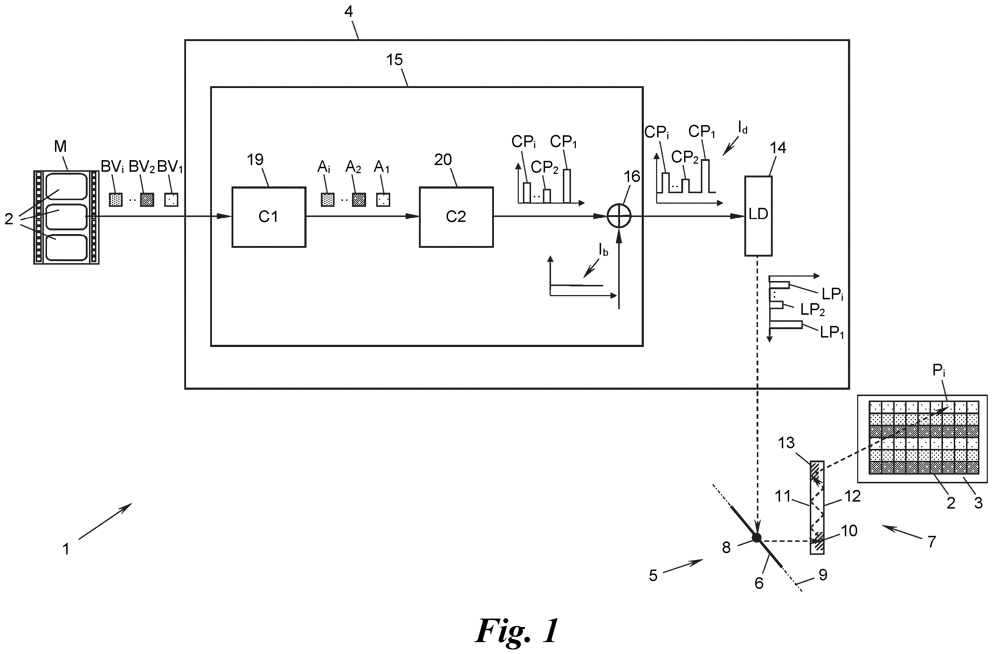

Fig. 1 shows a projector 1 projecting an image 2 comprised of pixels $P_i$ onto an image area 3. The image 2 may be part of a movie M, be a single image, e.g., a photo to be displayed for a longer period of time, be part of a larger image, etc. and may have any desired shape. The image 2 may, e.g., have any pixel resolution according to a conventional image or video standard such as full HD (1920 x 1080 pixels), UHD (3840 x 2160 pixels), 4K (4096 x 2160 pixels) etc., but may also be comprised of a small number of pixels, e.g., of only two, three or four pixels $P_i$. The image area 3 may be any kind of image area such as a board, projection screen, poster, the retina of an eye, an augmented reality (AR) combiner waveguide, another combiner optics like a holographic combiner or freeform combiner, or the like. Accordingly, the projector 1 may be part of a video beamer, AR or VR (virtual reality) glasses, a helmet, a head-up display, etc.

The projector 1 comprises a light source 4 emitting laser pulses $LP_i$, each for a corresponding pixel $P_i$ of the image 2, a mirror assembly 5 with one or more mirrors 6 which oscillate and deflect the laser pulses $LP_i$, each laser pulse $LP_i$ into a direction corresponding to the position of the pixel $P_i$ within the image 2, and a waveguide 7 guiding the deflected laser pulses $LP_i$ towards the image area 3 for projecting the image 2 thereon. The mirror assembly 5 may have, e.g., one micro-electro-mechanical-system (MEMS) mirror 6 oscillating about two axes 8, 9 or two MEMS mirrors each oscillating about a respective axis (not shown), to deflect and scan the laser pulses $LP_i$ in two directions according to a scanning pattern such as a Lissajous pattern, a raster pattern, a spiral pattern, etc. as known in the art. The waveguide 7 may be any waveguide known in the art and have, e.g., an in-coupling section 10 for coupling the laser pulses $LP_i$ in, two parallel sides 11, 12 for guiding the laser pulses $LP_i$ and an out-coupling section 13 for coupling the laser pulses $LP_i$ out towards the image area 3.

With reference to Figs. 1 to 4, the light source 4 of the projector 1 shall be described in detail. As can be seen in Fig. 1, the light source 4 comprises a laser diode 14 and a laser diode driver 15 driving the laser diode 14. The laser diode 14 may be any laser diode known in the art, e.g. a Vertical Cavity Surface Emitting Laser (VCSEL), a Fabry-Pérot laser diode, a Distributed Feedback (DFB) laser diode, a Quantum Well laser diode, a Quantum Cascade laser diode, an External Cavity Diode Laser (ECDL), a superluminescent LED (SLED), etc. and the laser diode driver 15 may be any electric circuit capable to carry out the functionalities described herein.

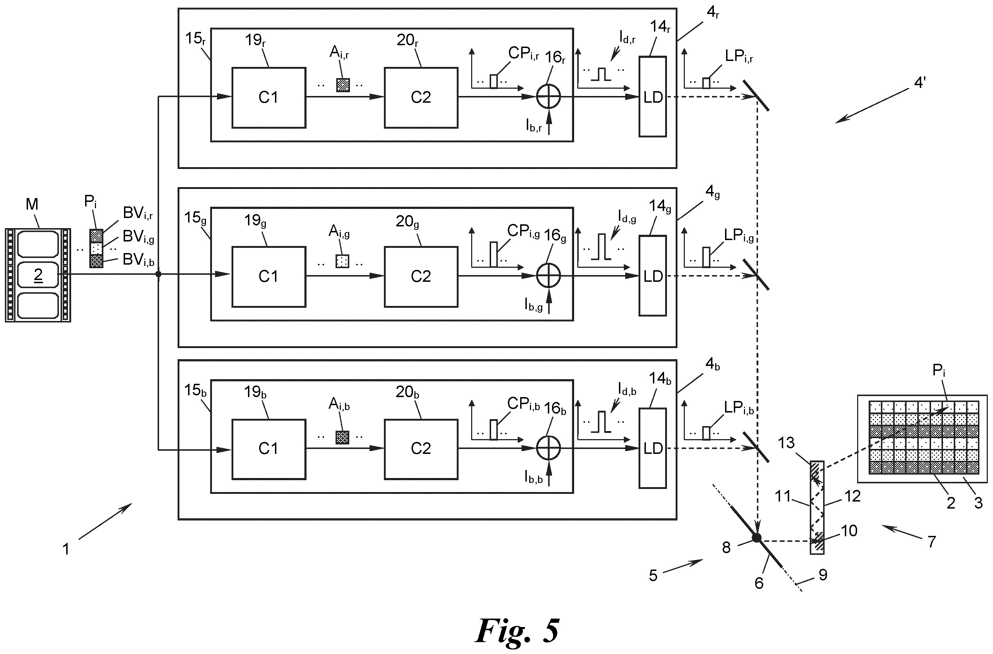

The laser diode driver 15 receives, for each pixel $P_i$ of the image 2, a respective brightness value $BV_i$ indicating a target brightness $B_i$ of that pixel $P_i$. The target brightness $B_i$ is in most cases a desired photometric brightness specifying a perception by a user of the projector 1 and in some cases a desired radiometric brightness specifying an emission of photons by the laser diode 14, e.g. an output power or the like. When projecting a monocoloured, black and white or greyscale image 2, each pixel $P_i$ may hold only one brightness value $BV_i$ for the single light source 4 shown in Fig. 1; when projecting a multicoloured image 2, each pixel $P_i$ may hold several brightness values, one for each colour, e.g., a red brightness value $BV_{i,r}$, a green brightness value $BV_{i,g}$ and a blue brightness value $BV_{i,b}$ for respective red, green and blue light sources $4_r$, $4_g$, $4_b$ as described further below with reference to Fig. 5.

The brightness values $BV_i$ may indicate the respective target brightnesses $B_i$ in many ways, e.g., as a percentage or fraction of a maximum target brightness, as an (integer) multiple of a target brightness increment, etc. The brightness values $BV_i$ are typically (albeit not necessarily) provided digitally. Depending on the bit depth used, the brightness values $BV_i$ for one colour and light source 4 may range from zero to a maximum value, e.g. from 0 to 255 for so called "True Colour" colour depth, from 0 to 511 for so called "Deep Colour" colour depth, etc.

The laser diode driver 15 forms a respective current pulse $CP_i$ for each received brightness value $BV_i$, superimposes the current pulses $CP_i$ and a constant bias current $I_b$ (here: by an adder 16) to obtain a driving current $I_d$, and drives the laser diode 14 with the driving current $I_d$.

The laser diode 14, in turn, is configured to lase whenever the driving current $I_d$ exceeds a threshold current $I_{th}$ and thus transforms each current pulse $CP_i$, when exceeding the threshold current $I_{th}$, into a respective laser pulse $LP_i$ having the target brightness $B_i$ of the respective pixel $P_i$. The bias current $I_b$ is constant throughout the projection of one or more images and may optionally be adjusted from time to time, by hand or by a (slower) feedback control loop, to compensate, e.g., for long-term temperature drifts or ageing of the laser diode 14.

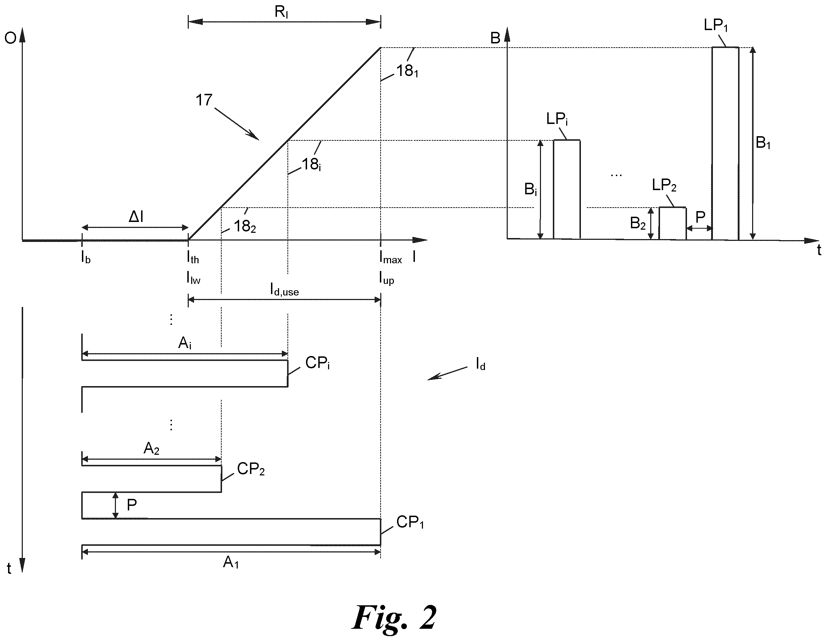

Details of the forming of the current pulse $CP_i$ are described with reference to Fig. 2 which illustrates an exemplary characteristic 17 of the laser diode 14 in a diagram of output power O over current I, an exemplary simplified driving current $I_d$ over time t below the diagram on the common abscissa of current I, and resulting exemplary laser pulses $LP_i$ over time t to the right of the diagram with an ordinate B indicating a photometric or radiometric brightness that is (linearly or nonlinearly) related to the output power O.

As shown in Fig. 2, the laser diode driver 15 forms each current pulse $CP_i$ with an amplitude $A_i$ that, in a way described below, corresponds to the respective brightness value $BV_i$ and yields the target brightness $B_i$ of the respective laser pulse $LP_i$. For instance, the first, second, ..., generally i-th, current pulse $CP_1$, $CP_2$, ..., $CP_i$, is formed with a respective amplitude $A_1$, $A_2$, ..., $A_i$, which yields, after superposition with the constant bias current $I_b$, according to the characteristic 17 following the dotted lines $18_1$, $18_2$, ..., $18_i$, the respective target brightness $B_1$, $B_2$, ..., $B_i$ for the first, second, ..., i-th laser pulse $LP_1$, $LP_2$, ..., $LP_i$. The amplitudes $A_i$ may be specified in many ways, e.g., as a percentage or fraction of a maximum amplitude, as an (integer) multiple of an amplitude increment, etc.

Other than shown in Fig. 2, laser diode drivers of the state of the art use a bias current that is equal to the threshold current $I_{th}$. In this case, the laser diode is biased to the edge of the lasing regime $R_l$ of the laser diode characteristic 17, i.e. to the onset of stimulated photon emission, which results in coherent laser pulses.

In contrast thereto, the laser diode driver 15 according to Fig. 2 (i) employs a bias current $I_b$ that is less than 90% of the threshold current $I_{th}$, for instance in a range of 10% to 80%, of 20% to 70%, or 30% to 60%, of the threshold current $I_{th}$, (ii) calculates, from the brightness values $BV_i$, the amplitudes $A_i$ which compensate for the lower bias current $I_b$, and (iii) adds pauses P between the current pulses $CP_i$, $CP_{i+1}$. Thereby, the laser diode driver 15 reduces or breaks the coherence of consecutive laser pulses $LP_i$, $LP_{i+1}$ and excludes residual lasing during said pauses P.

To this end, the laser diode driver 15 of Fig. 1 comprises a first converter 19 and a second converter 20. The first converter 19 receives the brightness values $BV_i$ and calculates, for each brightness value $BV_i$, the respective amplitude $A_i$ of the respective current pulse $CP_i$ which yields - after superposition with the bias current $I_b$ by the adder 16 and the transformation by the laser diode 14 - the respective laser pulse $LP_i$ with the target brightness $B_i$. When calculating the amplitudes $A_1$, the first converter 19 takes account for a difference $\Delta I$ between the threshold current $I_{th}$ and the bias current $I_b$ such that the amplitudes $A_i$ are larger than amplitudes of conventional laser diode drivers without this difference $\Delta I$. If the difference $\Delta I$ would not be accounted for, the laser pulses $LP_i$ would yield too low brightnesses (some not being emitted at all) and the image 2 would be too dark. The first converter 19 may be any converter which can calculate amplitudes $A_i$ from brightness values $BV_i$, e.g., an IC, ASIC, FPGA, CPU, etc. or a part thereof.

The second converter 20, in turn, forms each current pulse $CP_i$ with the respective amplitude $A_i$. When forming the current pulses $CP_i$, the second converter 19 separates each two consecutive pulses $CP_i$, $CP_{i+1}$ by a pause P. Thus, as shown in Fig. 2, each two consecutive current pulses $CP_i$, $CP_{i+1}$ of the driving current $I_d$ (lower panel) and the respective two consecutive laser pulses $LP_i$, $LP_{i+1}$ (right panel) are separated by a pause P. Consequently, the driving current $I_d$ returns to the bias current $I_b$ in said pause P, i.e., falls considerably below the threshold current $I_{th}$, which intermits lasing and breaks the coherence of consecutive laser pulses $LP_i$, $LP_{i+1}$. The second converter 20 may be any converter which can form current pulses $CP_i$ from amplitudes $A_i$, e.g., a digital-to-analog converter (DAC), a digital potentiometer, etc.

The first converter 19 may calculate the amplitudes $A_i$ in many ways, e.g., according to one of the following exemplary embodiments.

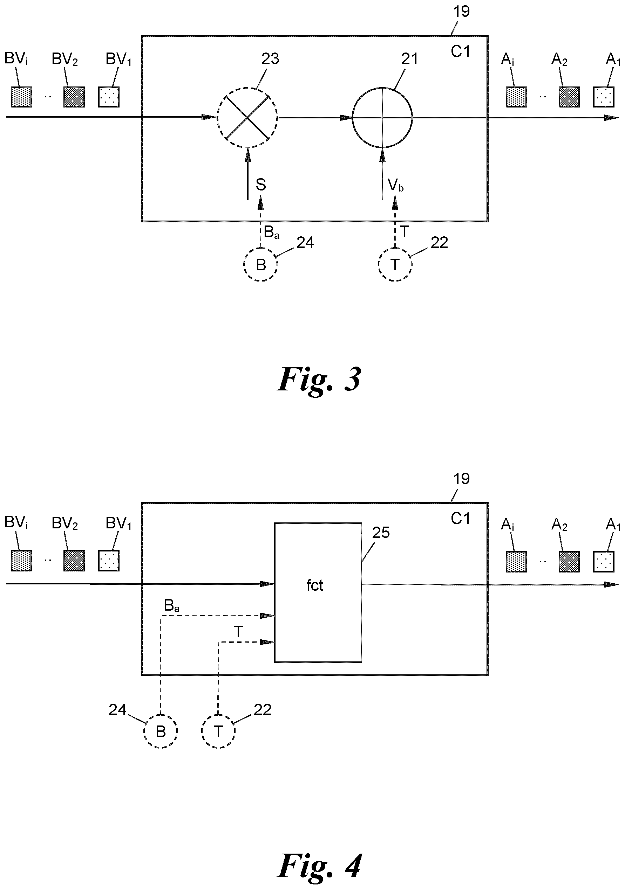

In a first exemplary embodiment shown in Fig. 3, the first converter 19 comprises an adder 21 which adds a bias value $V_b$ to each brightness value $BV_i$ to calculate the respective amplitude $A_i$. The bias value $V_b$ accounts for the difference $\Delta I$ between the threshold current $I_{th}$ and the bias current $I_b$ and shifts the current pulses $CP_i$ of the driving current $I_d$ into the lasing regime $R_1$. The bias value $V_b$ may either be predetermined, e.g. by measurement or computation, or determined by the first converter 19 itself, e.g. on-the-fly taking into account a temperature T sensed by a temperature sensor 22 and a given temperature dependence of the threshold current $I_{th}$ and thus the difference $\Delta I$, and/or taking into account an amplification level of an automatic power control (APC) circuit for the laser diode 14 (not shown).

Fig. 3 also shows an optional variant of this embodiment, wherein the first converter 19 further comprises a scaler 23 that scales, i.e. multiplies, each brightness value $BV_i$ with a scaling factor S before adding the bias value $V_b$. Thereby, the scaler 23 scales the range of the brightness value $BV_i$ from its lowest to its highest value and thus a range of the amplitude $A_i$ from its lowest to its highest value. Fig. 2 shows the use range $I_{d,use}$ which is used for emission between a lower driving current $I_{lw}$ and an upper driving current $I_{up}$. By said scaling and adding, this use range $I_{d,use}$ can be set such that the laser pulses $LP_i$ are emitted within a desired corresponding brightness range.

The scaling factor S may be predetermined, e.g. by measurement or computation, optionally such that the use range $I_{d,use}$ is between the threshold driving current $I_{th}$ and a maximum driving current $I_{max}$ of the laser diode 14, i.e. $I_{lw} = I_{th}$ and $I_{up} = I_{max}$, to project the image 2 at a maximal brightness variation. Alternatively, the scaling factor S may be determined by the first converter 19 itself, e.g. on-the-fly taking into account said amplification level of the APC circuit and/or an ambient brightness $B_a$ sensed by a brightness sensor 24 such that, for instance, the upper driving current $I_{up}$ is lower for a lower ambient brightness $B_a$ and higher for a higher ambient brightness $B_a$ to project the image 2 at an adapted brightness.

The scaling factor S may optionally be larger than one, e.g., when the brightness values $BV_i$ are quantised at a lower bit depth and the amplitudes $A_i$ are quantised at a higher bit depth. For instance, when the brightness values $BV_i$ are quantised at a bit depth of m bits and the amplitudes $A_i$ are quantised at bit depth of n bits, n being greater than m, the bias value $V_b$ and the scaling factor S may be calculated as

$$V_b = \frac{I_{th} - I_b}{I_{up} - I_b} \cdot \left(2^n - 1\right) \qquad \text{and} \qquad S = \frac{\left(2^n - 1\right) - V_b}{2^m - 1} \; .$$

In a second exemplary embodiment shown in Fig. 4, the first converter 19 calculates each amplitude $A_i$ by means of a given non-linear function 25. The non-linear function 25, for example, models the light source 4 downstream of the first converter 19 and optionally human perception. Accordingly, the non-linear function 25 may take into account the characteristic of the laser diode 14, e.g., the exemplary piecewise linear characteristic 17 shown in Fig. 2 or a non-linear characteristic (not shown), and/or the non-linear perception of radiometric brightness by the human eye, e.g. in terms of a gamma- and/or gamut-correction. To this end, the non-linear function 25 may be a piecewise linear or a (piecewise) non-linear function, e.g. a polynomial, logarithmic, exponential or rational function, etc., or a mixture thereof.

Optionally, the non-linear function 25 may depend on temperature T (which may be provided by the temperature sensor 22) and/or on ambient brightness $B_a$ (which may be provided by the brightness sensor 24), to take into account the temperature dependence of the laser diode characteristic and/or ambient brightness as described above.

In a third exemplary embodiment (not shown), the first converter 19 stores a look-up table which holds, for each brightness value $BV_i$, the respective amplitude $A_i$ and calculates each amplitude $A_i$ by retrieval from the look-up table. The look-up table is typically predetermined by means of measurements or by computation, in particular by simulation, and may take into account the characteristic of the laser diode 14, and/or non-linear perception by a user. Optionally, the look-up table may hold amplitudes $A_i$ for different amplification levels of the APC circuit (which may be provided by the APC circuit), for different temperatures (which may be provided by the temperature sensor 22) and/or for different ambient brightnesses (which may be provided by the brightness sensor 24) to take into account the temperature dependence of the laser diode characteristic and/or ambient brightness as described above.

Fig. 5 shows a further embodiment of the projector 1. In this embodiment, the projector 1 projects a multicoloured image 2 comprised of RGB pixels $P_i$ by means of a red light source $4_r$ emitting red laser pulses $LP_{i,r}$ each having a red target brightness $B_{i,r}$ indicated by a red brightness value $BV_{i,r}$ of a respective pixel $P_i$, a green light source $4_g$ emitting green laser pulses $LP_{i,g}$ each having a green target brightness $B_{i,g}$ indicated by a green brightness value $BV_{i,g}$ of the respective pixel $P_i$, and a blue light source $4_b$ emitting blue laser pulses $LP_{i,b}$ each having a blue target brightness $B_{i,b}$ indicated by a blue brightness value $BV_{i,b}$ of the respective pixel $P_i$. The red, green and blue light sources $4_r$, $4_g$, $4_b$ form a light source system 4'. The laser pulses $LP_{i,r}$, $LP_{i,g}$, $LP_{i,b}$ are created as detailed above for the light source 4, wherein same components are denoted by the same reference signs with an index r, g, b for the respective colour. The laser pulses $LP_{i,r}$, $LP_{i,g}$ and $LP_{i,b}$, which may optionally be merged, e.g. as shown in Fig. 5, are deflected by the mirror assembly 5 and guided by the waveguide 7 as detailed above.

In an optional embodiment of the light source system 4', the laser diode drivers $15_r$, $15_g$, $15_b$ also convert the RGB colour space used for pixel encoding to the colour space provided by the wavelengths emitted by the laser diodes $14_r$, $14_g$, $14_b$ by mixing several colour channels. As before, each first converter $19_r$, $19_g$, $19_b$ calculates the respective amplitudes $A_{i,r}$, $A_{i,g}$, $A_{i,b}$ for its laser diode, i.e. for the laser diode $14_r$, $14_g$, $14_b$ driven by the laser diode driver $15_r$, $15_g$, $15_b$. However, in this embodiment, each laser diode driver $15_r$, $15_g$, $15_b$ receives more than one brightness value $BV_i$ for each pixel $P_i$, e.g. the respective red, green and blue brightness values $BV_{i,r}$, $BV_{i,g}$, $BV_{i,b}$, and calculates the respective amplitude $A_{i,r}$, $A_{i,g}$, $A_{i,b}$ on the basis of the brightness values received for that pixel $P_i$, e.g., on the basis of the respective red, green and blue brightness values $BV_{i,r}$, $BV_{i,g}$, $BV_{i,b}$. Thereby, also wavelength drifts of the laser diodes can be taken into account when converting the RGB pixel colour space to the colour space provided by the current wavelengths emitted by the laser diodes $14_r$, $14_g$, $14_b$.

Optionally, the first converters $19_r$, $19_g$, $19_b$ and/or the second converters $20_r$, $20_g$, $20_b$ may be embodied as a single unit, e.g., as a common first converter unit, as a common second converter unit or as a common laser driver.

It is noted that the light source 4 and the light source system 4' described herein may be employed in many types of projectors, e.g., also in projectors without a mirror assembly and/or without a waveguide.

The invention is not restricted to the specific embodiments described above but encompasses all variants, modifications and combinations thereof that fall within the scope of the appended claims.

## Claims

1. A light source for a projector (1) projecting an image (2) comprised of pixels ($P_i$), the light source (4) comprising a laser diode (14) and a laser diode driver (15),

   wherein the laser diode driver (15) is configured to receive, for each pixel ($P_i$) of the image (2), a respective brightness value ($BV_i$) indicating a target brightness ($B_i$) of that pixel ($P_i$), to form, for each brightness value ($BV_i$), a respective current pulse ($CP_i$) having an amplitude ($A_i$) corresponding to that brightness value ($BV_i$), to super-impose a constant bias current ($I_b$) and the current pulses ($CP_i$) for obtaining a driving current ($I_d$), and to drive the laser diode (14) with the driving current ($I_d$), and
   wherein the laser diode (14) is configured to lase when the driving current ($I_d$) exceeds a threshold current ($I_{th}$) and to transform each current pulse ($CP_i$) into a respective laser pulse ($LP_i$) yielding the target brightness ($B_i$) of the respective pixel ($P_i$);
   **characterised in that** said bias current ($I_b$) is less than 90% of said threshold current ($I_{th}$), wherein the laser diode driver (15) further comprises a first converter (19) configured to calculate the amplitudes ($A_i$) and a second converter (20) configured to form the current pulses ($CP_i$), each two consecutive current pulses ($CP_i$, $CP_{i+1}$) being separated by a pause (P) .

2. The light source according to claim 1, wherein said bias current ($I_b$) is in a range of 10% to 80%, preferably of 20% to 70%, particularly preferably of 30% to 60%, of said threshold current ($I_{th}$).

3. The light source according to claim 1 or 2, wherein the first converter (19) is configured to calculate each amplitude ($A_i$) by scaling the respective brightness value ($BV_i$) by a scaling factor (S) and adding a bias value ($V_b$).

4. The light source according to claim 3, wherein the scaling factor (S) is larger than one.

5. The light source according to claim 1 or 2, wherein the first converter (19) is configured to calculate each amplitude ($A_i$) by means of a given non-linear function (25).

6. The light source according to claims 1 or 2, wherein the first converter (19) is configured to store a look-up table holding, for each brightness value ($BV_i$), the corresponding amplitude ($A_i$), and to calculate each amplitude ($A_i$) by retrieval from the look-up table.

7. A light source system comprising two or more light sources ($4_r$, $4_g$, $4_b$) according to any one of claims 1 to 6, wherein the light sources ($4_r$, $4_g$, $4_b$) differ from one another in the wavelengths of the laser pulses ($LP_{i,r}$, $LP_{i,g}$, $LP_{i,b}$) they are configured to emit.

8. The light source system according to claim 7, wherein each of the light sources ($4_r$, $4_g$, $4_b$) has a respective laser diode driver ($15_r$, $15_g$, $15_b$) which is configured to receive, for each pixel ($P_i$) of the image (2), brightness values ($BV_{i,r}$, $BV_{i,g}$, $BV_{i,b}$), each of which for a different colour, and wherein the first converter ($19_r$, $19_g$, $19_b$) of each laser diode driver ($15_r$, $15_g$, $15_b$) is configured to calculate the respective amplitude ($A_{i,r}$, $A_{i,g}$, $A_{i,b}$) on the basis of the brightness values ($BV_{i,r}$, $BV_{i,g}$, $BV_{i,b}$) received for that pixel ($P_i$).

9. A projector for projecting an image (2), comprising the light source (4) according to any one of claims 1 to 6 or the light source system (4') according to claim 7 or 8, a mirror assembly (5) with one or more mirrors (6) configured to oscillate and deflect the laser pulses ($LP_i$; $LP_{i,r}$, $LP_{i,g}$, $LP_{i,b}$) emitted by said one or more light sources (4; $4_r$, $4_g$, $4_b$), and a waveguide (7) configured to guide the deflected laser pulses ($LP_i$; $LP_{i,r}$, $LP_{i,g}$, $LP_{i,b}$) towards an image area (3) for projecting said image (2).

**Amended claims in accordance with Rule 137(2) EPC.**

1. A light source for a projector (1) projecting an image (2) comprised of pixels ($P_i$), the light source (4) comprising a laser diode (14) and a laser diode driver (15),

   wherein the laser diode driver (15) is configured to receive, for each pixel ($P_i$) of the image (2), a respective brightness value ($BV_i$) indicating a target brightness ($B_i$) of that pixel ($P_i$), to form, for each brightness value ($BV_i$), a respective current pulse ($CP_i$) having an amplitude ($A_i$) corresponding to that brightness value ($BV_i$), to super-impose a constant bias current ($I_b$) and the current pulses ($CP_i$) for obtaining a driving current ($I_d$), and to drive the laser diode (14) with the driving current ($I_d$),
   wherein the laser diode (14) is configured to lase when the driving current ($I_d$) exceeds a threshold current ($I_{th}$) and to transform each current pulse ($CP_i$) into a respective laser pulse ($LP_i$) yielding the target brightness ($B_i$) of the respective pixel ($P_i$), and
   wherein said bias current ($I_b$) is less than 90% of said threshold current ($I_{th}$);
   **characterised in that** the laser diode driver (15) further comprises a first converter (19) configured to calculate each amplitude ($A_i$) by scaling the respective brightness value ($BV_i$) by a scaling factor (S) and adding a bias value ($V_b$), and a second converter (20) configured to form the current pulses ($CP_i$), each two consecutive current pulses ($CP_i$, $CP_{i+1}$) being separated by a pause (P).

2. The light source according to claim 1, wherein said bias current ($I_b$) is in a range of 10% to 80%, preferably of 20% to 70%, particularly preferably of 30% to 60%, of said threshold current ($I_{th}$).

3. The light source according to claim 1 or 2, wherein the scaling factor (S) is larger than one.

4. A light source system comprising two or more light sources ($4_r$, $4_g$, $4_b$) according to any one of claims 1 to 3, wherein the light sources ($4_r$, $4_g$, $4_b$) differ from one another in the wavelengths of the laser pulses ($LP_{i,r}$, $LP_{i,g}$, $LP_{i,b}$) they are configured to emit.

5. The light source system according to claim 6, wherein each of the light sources ($4_r$, $4_g$, $4_b$) has a respective laser diode driver ($15_r$, $15_g$, $15_b$) which is configured to receive, for each pixel ($P_i$) of the image (2), brightness values ($BV_{i,r}$, $BV_{i,g}$, $BV_{i,b}$), each of which for a different colour, and wherein the first converter ($19_r$, $19_g$, $19_b$) of each laser diode driver ($15_r$, $15_g$, $15_b$) is configured to calculate the respective amplitude ($A_{i,r}$, $A_{i,g}$, $A_{i,b}$) on the basis of the brightness values ($BV_{i,r}$, $BV_{i,g}$, $BV_{i,b}$) received for that pixel ($P_i$).

6. A projector for projecting an image (2), comprising the light source (4) according to any one of claims 1 to 3 or the light source system (4') according to claim 4 or 5, a mirror assembly (5) with one or more mirrors (6) configured to oscillate and deflect the laser pulses ($LP_i$; $LP_{i,r}$, $LP_{i,g}$, $LP_{i,b}$) emitted by said one or more light sources (4; $4_r$, $4_g$, $4_b$), and a waveguide (7) configured to guide the deflected laser pulses ($LP_i$; $LP_{i,r}$, $LP_{i,g}$, $LP_{i,b}$) towards an image area (3) for projecting said image (2).

*Fig. 1*

*Fig. 2*

EP 4 708 841 A1

**Fig. 3**

**Fig. 4**

*Fig. 5*

**EUROPEAN SEARCH REPORT**

Application Number

EP 24 19 9403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/198606 A1 (AMS SENSORS BELGIUM BVBA [BE]) 19 October 2023 (2023-10-19) | 1-4,7-9 | INV. H04N9/31 |
| Y | * page 27, paragraph 5 - page 35, paragraph 4 *<br>* figures 2A-4B *<br>* figure 6 *<br>* page 64, paragraph 3 - page 65, paragraph 2 *<br>* page 44, paragraph 2 - page 45, paragraph 1 *<br>* page 37, paragraph 2 *<br>* page 38, paragraph 3 - page 41, paragraph 2 *<br>* page 49, paragraph 2 - page 50, paragraph 1 * | 5,6 | |
| X | US 2020/296337 A1 (TANAKA TOYOKI [JP] ET AL) 17 September 2020 (2020-09-17) | 1,2,7-9 | |
| A | * figure 4 *<br>* paragraph [0003] *<br>* paragraph [0031] *<br>* paragraph [0038] - paragraph [0040] *<br>* figure 7 * | 3-6 | |
| Y | US 2011/181791 A1 (HUANG HENG [US] ET AL) 28 July 2011 (2011-07-28)<br>* paragraph [0022] *<br>* paragraph [0059] - paragraph [0061] *<br>* paragraph [0091] * | 5,6 | TECHNICAL FIELDS SEARCHED (IPC)<br><br>H04N |
| A | US 2019/157839 A1 (GUDAITIS ALGIRD MICHAEL [US] ET AL) 23 May 2019 (2019-05-23)<br>* figure 2 * | 1-9 | |

The present search report has been drawn up for all claims

| Place of search | Date of completion of the search | Examiner |
|---|---|---|
| The Hague | 5 February 2025 | Lim, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 9403

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | | | Publication date | Patent family member(s) | | | Publication date |
|---|---|---|---|---|---|---|---|
| WO 2023198606 | A1 | | 19-10-2023 | CN | 118891867 | A | 01-11-2024 |
| | | | | EP | 4508830 | A1 | 19-02-2025 |
| | | | | WO | 2023198606 | A1 | 19-10-2023 |
| US 2020296337 | A1 | | 17-09-2020 | CN | 111694148 | A | 22-09-2020 |
| | | | | JP | 7479123 | B2 | 08-05-2024 |
| | | | | JP | 2020148859 | A | 17-09-2020 |
| | | | | US | 2020296337 | A1 | 17-09-2020 |
| US 2011181791 | A1 | | 28-07-2011 | NONE | | | |
| US 2019157839 | A1 | | 23-05-2019 | EP | 3701716 | A1 | 02-09-2020 |
| | | | | US | 2019157839 | A1 | 23-05-2019 |
| | | | | WO | 2019083750 | A1 | 02-05-2019 |

EPO FORM P0459

For more details about this annex : see Official Journal of the European Patent Office, No. 12/82